# EUROPEAN PATENT APPLICATION

(11) **EP 3 512 262 A1**
(43) Date of publication of application: **17.07.2019**
(21) Application number: 17848002.6
(22) Date of filing: 19.07.2017
(51) Int. Cl.: H04W 52/02

(54) **WIRELESS LOCAL AREA NETWORK COMMUNICATIONS METHOD, RECEIVER, ACCESS POINT AND STATION**

(30) Priority: 09.09.2016 CN 201610815735
(71) Applicant: Meizu Technology Co., Ltd., Zhuhai, Guangdong 519085 (CN)
(72) Inventor: DONG, Xiandong, Zhuhai Guangdong 519085 (CN)
(74) Representative: Dr. Weitzel & Partner
(86) International application number: PCT/CN2017/093583
(87) International publication number: WO 2018/045829

(57) **Abstract**

The present invention provides a communication method of a wireless local area network, a receiver, an access point and a station. The communication method of the wireless local area network includes: receiving, by a first receiver for receiving a wake up frame, a wake up frame, wherein the first receiver is in a light awake state, and the light awake state is a state for monitoring the wake up frame; and after the first receiver receives the wake up frame, sending a wake up instruction to a second receiver that is configured to receive an IEEE 802.11 data frame and is in a sleep state, so as to wake up the second receiver to receive the IEEE 802.11 data frame. The technical solution of the present invention may meet the demands of WUR by defining a new state, thereby being conducive to reducing the power consumption of a device.

## Description

The present application claims the priority of Chinese Application No. 201610815735.9, filed with the Chinese Patent Office on September 09, 2016, and entitled "WIRELESS LOCAL AREA NETWORK COMMUNICATIONS METHOD, RECEIVER, ACCESS POINT AND STATION", the entire contents of which are herein incorporated by reference.

### Field of the Invention

The present invention relates to the field of communication technology, and in particular, to a communication method of a wireless local area network, a receiver, an access point and a station.

### Background of the Invention

In July 2016, 802.11 established a research group WUR (Wake Up Receiver) of the next-generation Wi-Fi (Wireless Fidelity) technology, which is mainly used in the Internet of Things in order to reduce the power consumption of a device as much as possible.

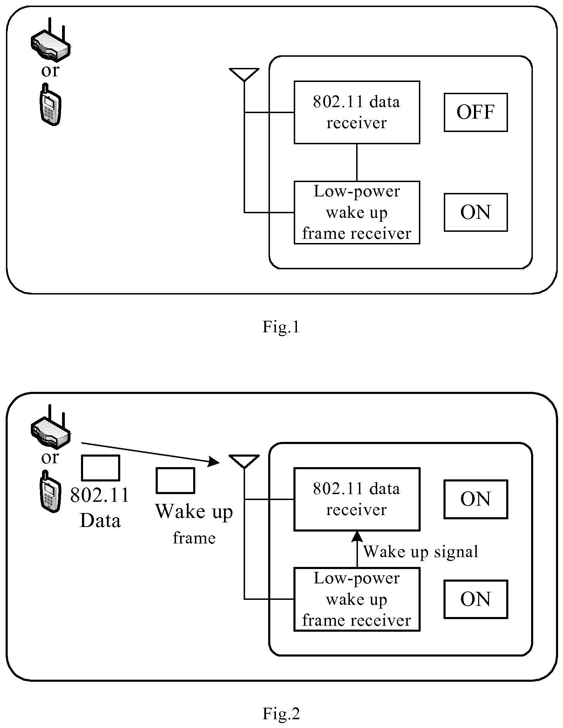

In the WUR research group, it is introduced that the 802.11 device has two receivers: a traditional IEEE (Institute of Electrical and Electronics Engineers) 802.11 data receiver and a wake up communication frame receiver. As shown in Fig.1, when no IEEE 802.11 data need to be received, the traditional 802.11 data receiver is in a sleep state, and the low-power wake up frame receiver is in an awake state; and as shown in Fig.2, when there are data need to be received, a data sender will send the wake up frame at first, and then send 802.11 data, when the low-power wake up frame receiver receives the wake up frame, it sends a wake up signal to the 802.11 data receiver, so that the 802.11 data receiver is in the awake state to receive the 802.11 data.

Therefore, in the existing Wi-Fi standard, the 802.11 device has only two states: an awake state and a sleep state. In the WUR research group, when the 802.11 data receiver is in the sleep state, the wake up frame receiver is in the awake state, which is incompatible with the device state defined in the existing Wi-Fi technology, so a new state needs to be defined to meet the demands of the WUR.

### Summary of the Invention

The present invention proposes a new communication solution of a wireless local area network based on at least one of the above technical problems, so that a new state may be defined to meet the demands of a WUR, thereby being conducive to reducing the power consumption of a device.

In view of this, according to a first aspect of the present invention, a communication method of a wireless local area network is provided, including: receiving, by a first receiver for receiving a wake up frame, a wake up frame, wherein the first receiver is in a light awake state, and the light awake state is a state for monitoring the wake up frame; and after the first receiver receives the wake up frame, sending a wake up instruction to a second receiver that is configured to receive an IEEE 802.11 data frame and is in a sleep state, so as to wake up the second receiver to receive the IEEE 802.11 data frame.

In the technical solution, by defining a new receiver state, that is, the light awake state, the first receiver receiving the wake up frame can be in the state to monitor and receive the wake up frame, and thus, upon receiving the wake up frame, the first receiver can send the wake up instruction to the second receiver that is configured to receive the IEEE 802.11 data frame and is in the sleep state, so as to wake up the second receiver to receive the IEEE 802.11 data frame. Therefore, the present invention defines a new state, that is, the light awake state, to meet the demands of the WUR, thereby being conducive to reducing the power consumption of the device.

The wake up frame is also a communication frame defined in 802.11. The receiver of the wake up frame and the receiver of the IEEE 802.11 data frame may be the same physical entity, but are logically separated, and their working states are controlled by different internal operation instructions; and in addition, the receiver of the wake up frame and the receiver of the IEEE 802.11 data frame may also be two physical entities, and there is a communication interface between the receiver of the wake up frame and the receiver of the IEEE 802.11 data frame, the receiver of the wake up frame sends the wake up instruction to the receiver of the IEEE 802.11 data frame through the communication interface after receiving the wake up frame, so as to wake up the receiver of the IEEE 802.11 data frame for communication.

The IEEE 802.11 data frame refers to a data frame transmitted by a protocol such as 802.11a/b/g/n/ac/ax/ah, which follows the transmission power in the respective protocols, and the transmission power of the IEEE 802.11 data frame is much higher than the transmission power of the wake up frame.

In the above technical solution, preferably, after sending the wake up instruction to the second receiver, the method further includes: receiving, by the first receiver, a notification message sent by the second receiver, wherein the notification message is used for notifying the first receiver that the second receiver has completed receiving the IEEE 802.11 data frame and will enter the sleep state again.

In the technical solution, the first receiver receives the notification message sent by the second receiver, so that the first receiver can determine the receiving condition of the IEEE 802.11 data frame by the second receiver and the state of the second receiver according to the notification message sent by the second receiver, and accordingly, the first receiver can send the notification message to the second receiver again upon receiving the wake up frame again.

According to a second aspect of the present invention, a communication method of a wireless local area network is further provided, including: receiving, by a second receiver that is configured to receive an IEEE 802.11 data frame and is in a sleep state, a wake up instruction sent by a first receiver, wherein the first receiver is in a light awake state, and the first receiver sends the wake up instruction to the second receiver after receiving a wake up frame; and entering, by the second receiver, an awake state to receive the IEEE 802.11 data frame after receiving the wake up instruction.

In the technical solution, by defining a new receiver state, that is, the light awake state, the first receiver receiving the wake up frame can be in the state to monitor and receive the wake up frame, and thus, upon receiving the wake up frame, the first receiver can send the wake up instruction to the second receiver that is configured to receive the IEEE 802.11 data frame and is in the sleep state, so as to wake up the second receiver to receive the IEEE 802.11 data frame. Therefore, the present invention defines a new state, that is, the light awake state, to meet the demands of the WUR, thereby being conducive to reducing the power consumption of the device.

In the above technical solution, preferably, the communication method of the wireless local area network further includes: after completing the reception of the IEEE 802.11 data frame, entering, by the second receiver, the sleep state again, and sending a notification message of being about to enter the sleep state again to the first receiver.

In the technical solution, the second receiver sends the notification message of being about to enter the sleep state again to the first receiver, so that the first receiver can determine the receiving condition of the IEEE 802.11 data frame by the second receiver and the state of the second receiver according to the notification message sent by the second receiver, and accordingly, the first receiver can send the notification message to the second receiver again upon receiving the wake up frame again.

According to a third aspect of the present invention, a receiver is further provided, the receiver is in a light awake state, the light awake state is a state for monitoring a wake up frame, and the receiver includes: a first receiving unit for receiving a wake up frame; and a sending unit for sending a wake up instruction to a second receiver that is configured to receive an IEEE 802.11 data frame and is in a sleep state after the first receiving unit receives the wake up frame, so as to wake up the second receiver to receive the IEEE 802.11 data frame.

In the technical solution, by defining a new receiver state, that is, the light awake state, the first receiver receiving the wake up frame may be in the state to monitor and receive the wake up frame, and thus, upon receiving the wake up frame, the first receiver may send the wake up instruction to the second receiver that is configured to receive the IEEE 802.11 data frame and is in the sleep state, so as to wake up the second receiver to receive the IEEE 802.11 data frame. Therefore, the present invention defines a new state, that is, the light awake state, to meet the demands of the WUR, thereby being conducive to reducing the power consumption of the device.

The IEEE 802.11 data frame refers to a data frame transmitted by a protocol such as 802.11a/b/g/n/ac/ax/ah, which follows the transmission power in the respective protocols, and the transmission power of the IEEE 802.11 data frame is much higher than the transmission power of the wake up frame; the wake up frame is also a communication frame defined in 802.11. The receiver of the wake up frame and the receiver of the IEEE 802.11 data frame may be the same physical entity, but are logically separated, and their working states are controlled by different internal operation instructions; and in addition, the receiver of the wake up frame and the receiver of the IEEE 802.11 data frame may also be two physical entities, and there is a communication interface between the receiver of the wake up frame and the receiver of the IEEE 802.11 data frame, the receiver of the wake up frame sends the wake up instruction to the receiver of the IEEE 802.11 data frame through the communication interface after receiving the wake up frame, so as to wake up the receiver of the IEEE 802.11 data frame for communication.

In the above technical solution, preferably, the receiver further includes: a second receiving unit for receiving a notification message sent by the second receiver after the sending unit sends the wake up instruction to the second receiver, wherein the notification message is used for indicating that the second receiver has completed receiving the IEEE 802.11 data frame and will enter the sleep state again.

In the technical solution, the receiver receiving the wake up frame receives the notification message sent by the second receiver, so that the receiver receiving the wake up frame can determine the receiving condition of the IEEE 802.11 data frame by the second receiver and the state of the second receiver according to the notification message sent by the second receiver, and accordingly, the receiver receiving the wake up frame can send the notification message to the second receiver again upon receiving the wake up frame again.

According to a fourth aspect of the present invention, a receiver is further provided, the receiver is used for receiving an 802.11 data frame and is in a sleep state, and the receiver includes: a receiving unit for receiving a wake up instruction sent by a first receiver, wherein the first receiver is in a light awake state, and the first receiver sends the wake up instruction after receiving a wake up frame; and a processing unit for entering an awake state so as to receive the IEEE 802.11 data frame after the receiving unit receives the wake up instruction.

In the technical solution, by defining a new receiver state, that is, the light awake state, the first receiver receiving the wake up frame can be in the state to monitor and receive the wake up frame, and thus, upon receiving the wake up frame, the first receiver can send the wake up instruction to the receiver that is configured to receive the IEEE 802.11 data frame and is in the sleep state, so as to wake up the receiver for receiving the IEEE 802.11 data frame to receive the IEEE 802.11 data frame. Therefore, the present invention defines a new state, that is, the light awake state, to meet the demands of the WUR, thereby being conducive to reducing the power consumption of the device.

In the above technical solution, preferably, the processing unit is further used for entering the sleep state again after completing the reception of the IEEE 802.11 data frame; and the receiver further includes: a sending unit for sending a notification message of being about to enter the sleep state again to the first receiver.

In the technical solution, the receiver for receiving the IEEE 802.11 data frame sends the notification message of being about to enter the sleep state again to the first receiver, so that the first receiver can determine the receiving condition of the IEEE 802.11 data frame by the receiver for receiving the IEEE 802.11 data frame and the state of the receiver for receiving the IEEE 802.11 data frame according to the notification message sent by the receiver for receiving the IEEE 802.11 data frame, and accordingly, the first receiver can send the notification message to the receiver for receiving the IEEE 802.11 data frame again upon receiving the wake up frame again.

According to a fifth aspect of the present invention, an access point is further provided, including: the receiver of the above third aspect; and the receiver of the above fourth aspect.

According to a sixth aspect of the present invention, a station is further provided, including: the receiver of the above third aspect; and the receiver of the above fourth aspect.

Through the above technical solutions, the demands of the WUR may be satisfied by defining a new state, thereby being conducive to reducing the power consumption of the device.

### Brief Description of the Drawings

Fig.1 shows a schematic diagram of states of a 802.11 data receiver and a wake up communication frame receiver when no 802.11 data frame needs to be received;
Fig.2 shows a schematic diagram of states of a 802.11 data receiver and a wake up communication frame receiver when a 802.11 data frame needs to be received;
Fig.3 shows a schematic flow diagram of a communication method of a wireless local area network according to a first embodiment of the present invention;
Fig.4 shows a schematic flow diagram of a communication method of a wireless local area network according to a second embodiment of the present invention;
Fig.5 shows a schematic block diagram of a receiver according to the first embodiment of the present invention;
Fig.6 shows a schematic flow diagram of a communication method of a wireless local area network according to a third embodiment of the present invention;
Fig.7 shows a schematic flow diagram of a communication method of a wireless local area network according to a fourth embodiment of the present invention;
Fig.8 shows a schematic block diagram of a receiver according to the second embodiment of the present invention;
Fig.9 shows a schematic block diagram of an access point according to an embodiment of the present invention;
Fig.10 shows a schematic block diagram of a station according to an embodiment of the present invention;
Fig.11 shows a schematic diagram of an interaction process between a wake up communication frame receiver in a light awake state and a 802.11 data receiver according to an embodiment of the present invention.

### Detailed Description of the Embodiments

In order that above objects, features and advantages of the present invention can be understood more clearly, the present invention is further described in detail below with reference to the drawings and specific embodiments. It should be noted that the embodiments in the present application and the features in the embodiments may be combined with each other without conflict.

In the following description, numerous specific details are set forth in order to provide a full understanding of the present invention, but the present invention may be practiced otherwise than as described herein, therefore the protection scope of the present invention is not limited by the specific embodiments disclosed below.

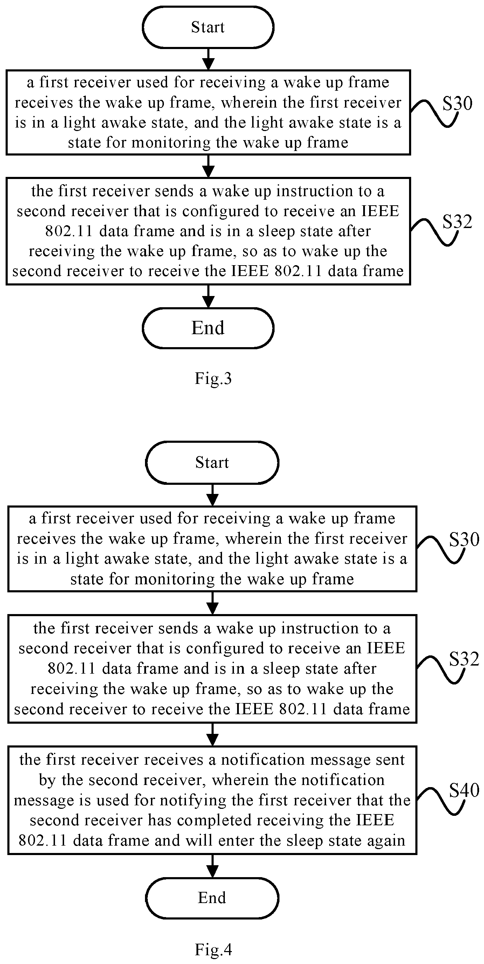

Fig.3 shows a schematic flow diagram of a communication method of a wireless local area network according to a first embodiment of the present invention.

As shown in Fig.3, the communication method of the wireless local area network according to the first embodiment of the present invention includes:
step S30, a first receiver used for receiving a wake up frame receives the wake up frame, wherein the first receiver is in a light awake state, and the light awake state is a state for monitoring the wake up frame.
   The wake up frame is also a communication frame defined in 802.11.
Step S32, the first receiver sends a wake up instruction to a second receiver that is configured to receive an IEEE 802.11 data frame and is in a sleep state after receiving the wake up frame, so as to wake up the second receiver to receive the IEEE 802.11 data frame.

The IEEE 802.11 data frame refers to a data frame transmitted by a protocol such as 802.11a/b/g/n/ac/ax/ah, which follows the transmission power in the respective protocols, and the transmission power of the IEEE 802.11 data frame is much higher than the transmission power of the wake up frame. The receiver of the wake up frame and the receiver of the IEEE 802.11 data frame may be the same physical entity, but are logically separated, and their working states are controlled by different internal operation instructions; and in addition, the receiver of the wake up frame and the receiver of the IEEE 802.11 data frame may also be two physical entities, and there is a communication interface between the receiver of the wake up frame and the receiver of the IEEE 802.11 data frame, the receiver of the wake up frame sends the wake up instruction to the receiver of the IEEE 802.11 data frame through the communication interface after receiving the wake up frame, so as to wake up the receiver of the IEEE 802.11 data frame for communication.

Specifically, by defining a new receiver state, that is, the light awake state, the first receiver receiving the wake up frame can be in the state to monitor and receive the wake up frame, and thus, upon receiving the wake up frame, the first receiver can send the wake up instruction to the second receiver that is configured to receive the IEEE 802.11 data frame and is in the sleep state, so as to wake up the second receiver to receive the IEEE 802.11 data frame. Therefore, the present invention defines a new state, that is, the light awake state, to meet the demands of the WUR, thereby being conducive to reducing the power consumption of the device.

As shown in Fig.4, the communication method of the wireless local area network according to the second embodiment of the present invention further includes after the step S32:
step S40: the first receiver receives a notification message sent by the second receiver, wherein the notification message is used for notifying the first receiver that the second receiver has completed receiving the IEEE 802.11 data frame and will enter the sleep state again.

In the technical solution, the first receiver receives the notification message sent by the second receiver, so that the first receiver can determine the receiving condition of the IEEE 802.11 data frame by the second receiver and the state of the second receiver according to the notification message sent by the second receiver, and accordingly, the first receiver can send the notification message to the second receiver again upon receiving the wake up frame again.

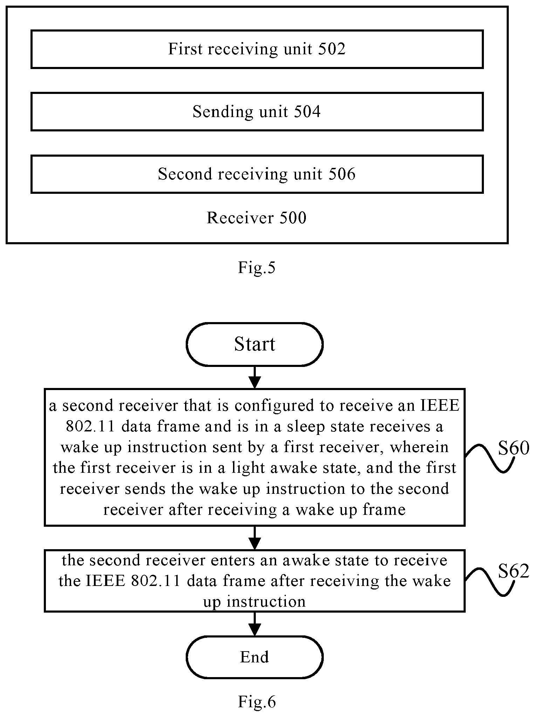

Fig.5 shows a schematic block diagram of a receiver according to the first embodiment of the present invention, the receiver is in a light awake state, wherein the light awake state is a state for monitoring a wake up frame.

As shown in Fig.5, the receiver 500 according to the first embodiment of the present invention includes: a first receiving unit 502 and a sending unit 504.

The first receiving unit 502 is used for receiving a wake up frame; and the sending unit 504 is used for sending a wake up instruction to a second receiver that is configured to receive an IEEE 802.11 data frame and is in a sleep state after the first receiving unit 502 receives the wake up frame, so as to wake up the second receiver to receive the IEEE 802.11 data frame.

In specific implementation, the first receiving unit 502 may be a receiver or an antenna or the like; and the sending unit 504 may be a transmitter or an antenna or the like.

In the technical solution, by defining a new receiver state, that is, the light awake state, the receiver receiving the wake up frame can be in the state to monitor and receive the wake up frame, and thus, upon receiving the wake up frame, the receiver receiving the wake up frame can send the wake up instruction to the second receiver that is configured to receive the IEEE 802.11 data frame and is in the sleep state, so as to wake up the second receiver to receive the IEEE 802.11 data frame. Therefore, the present invention defines a new state, that is, the light awake state, to meet the demands of the WUR, thereby being conducive to reducing the power consumption of the device.

The IEEE 802.11 data frame refers to a data frame transmitted by a protocol such as 802.11a/b/g/n/ac/ax/ah, which follows the transmission power in the respective protocols, and the transmission power of the IEEE 802.11 data frame is much higher than the transmission power of the wake up frame; the wake up frame is also a communication frame defined in 802.11. The receiver of the wake up frame and the receiver of the IEEE 802.11 data frame may be the same physical entity, but are logically separated, and their working states are controlled by different internal operation instructions; and in addition, the receiver of the wake up frame and the receiver of the IEEE 802.11 data frame may also be two physical entities, and there is a communication interface between the receiver of the wake up frame and the receiver of the IEEE 802.11 data frame, the receiver of the wake up frame sends the wake up instruction to the receiver of the IEEE 802.11 data frame through the communication interface after receiving the wake up frame, so as to wake up the receiver of the IEEE 802.11 data frame for communication.

Further, the receiver 500 as shown in Fig.5 further includes: a second receiving unit 506 for receiving a notification message sent by the second receiver after the sending unit 504 sends the wake up instruction to the second receiver, wherein the notification message is used for indicating that the second receiver has completed receiving the IEEE 802.11 data frame and will enter the sleep state again.

In specific implementation, the second receiving unit 506 may be a receiver or an antenna or the like.

In the technical solution, the receiver receiving the wake up frame receives the notification message sent by the second receiver, so that the receiver receiving the wake up frame can determine the receiving condition of the IEEE 802.11 data frame by the second receiver and the state of the second receiver according to the notification message sent by the second receiver, and accordingly, the receiver receiving the wake up frame can send the notification message to the second receiver again upon receiving the wake up frame again.

Fig.6 shows a schematic flow diagram of a communication method of a wireless local area network according to a third embodiment of the present invention.

As shown in Fig.6, the communication method of the wireless local area network according to the third embodiment of the present invention includes:
Step S60, a second receiver that is configured to receive an IEEE 802.11 data frame and is in a sleep state receives a wake up instruction sent by a first receiver, wherein the first receiver is in a light awake state, and the first receiver sends the wake up instruction to the second receiver after receiving a wake up frame.
Step S62, the second receiver enters an awake state to receive the IEEE 802.11 data frame after receiving the wake up instruction.

In the technical solution, by defining a new receiver state, that is, the light awake state, the first receiver receiving the wake up frame can be in the state to monitor and receive the wake up frame, and thus, upon receiving the wake up frame, the first receiver can send the wake up instruction to the second receiver that is configured to receive the IEEE 802.11 data frame and is in the sleep state, so as to wake up the second receiver to receive the IEEE 802.11 data frame. Therefore, the present invention defines a new state, that is, the light awake state, to meet the demands of the WUR, thereby being conducive to reducing the power consumption of the device.

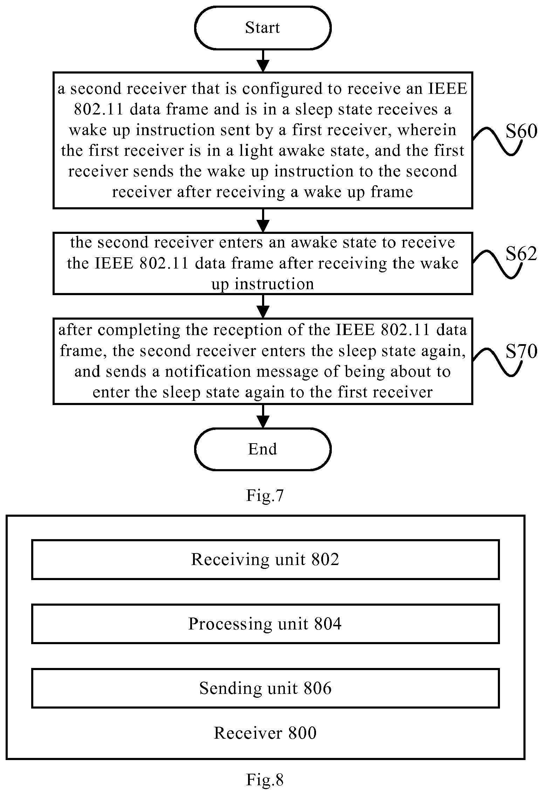

Further, as shown in Fig.7, the communication method of the wireless local area network according to the fourth embodiment of the present invention further includes after the step S62:
step S70, after completing the reception of the IEEE 802.11 data frame, the second receiver enters the sleep state again, and sends a notification message of being about to enter the sleep state again to the first receiver.

In the technical solution, the second receiver sends the notification message of being about to enter the sleep state again to the first receiver, so that the first receiver can determine the receiving condition of the IEEE 802.11 data frame by the second receiver and the state of the second receiver according to the notification message sent by the second receiver, and accordingly, the first receiver can send the notification message to the second receiver again upon receiving the wake up frame again.

Fig.8 shows a schematic block diagram of a receiver according to the second embodiment of the present invention, and the receiver is used for receiving an 802.11 data frame and is in a sleep state.

As shown in Fig.8, the receiver 800 according to the second embodiment of the present invention includes a receiving unit 802 and a processing unit 804.

The receiving unit 802 is used for receiving a wake up instruction sent by a first receiver, wherein the first receiver is in a light awake state, and the first receiver sends the wake up instruction after receiving a wake up frame; and the processing unit 804 is used for entering an awake state so as to receive the IEEE 802.11 data frame after the receiving unit 802 receives the wake up instruction.

In specific implementation, the receiving unit 802 may be a receiver or an antenna or the like; and the processing unit 804 may be a central processing unit or a baseband processor or the like.

In the technical solution, by defining a new receiver state, that is, the light awake state, the first receiver receiving the wake up frame can be in the state to monitor and receive the wake up frame, and thus, upon receiving the wake up frame, the first receiver can send the wake up instruction to the receiver that is configured to receive the IEEE 802.11 data frame and is in the sleep state, so as to wake up the receiver for receiving the IEEE 802.11 data frame to receive the IEEE 802.11 data frame. Therefore, the present invention defines a new state, that is, the light awake state, to meet the demands of the WUR, thereby being conducive to reducing the power consumption of the device.

Further, the processing unit 804 is further used for entering the sleep state again after completing the reception of the IEEE 802.11 data frame; and the receiver 800 further includes: a sending unit 806 for sending a notification message of being about to enter the sleep state again to the first receiver.

In specific implementation, the transmitting unit 806 may be a transmitter, an antenna or the like.

In the technical solution, the receiver for receiving the IEEE 802.11 data frame sends the notification message of being about to enter the sleep state again to the first receiver, so that the first receiver can determine the receiving condition of the IEEE 802.11 data frame by the receiver for receiving the IEEE 802.11 data frame and the state of the receiver for receiving the IEEE 802.11 data frame according to the notification message sent by the receiver for receiving the IEEE 802.11 data frame, and accordingly, the first receiver can send the notification message to the receiver for receiving the IEEE 802.11 data frame again upon receiving the wake up frame again.

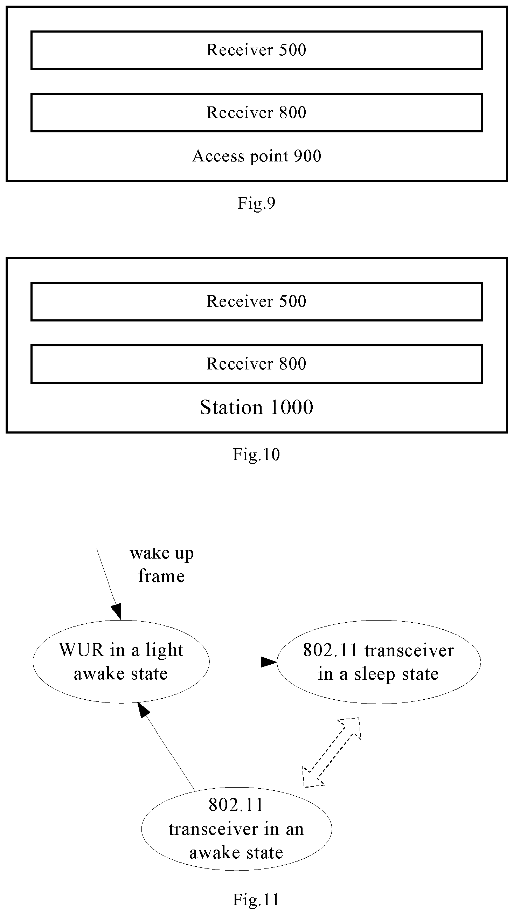

Fig.9 shows a schematic block diagram of an access point according to an embodiment of the present invention.

As shown in Fig.9, the access point 900 according to the embodiment of the present invention includes: the receiver 500 as shown in Fig.5; and the receiver 800 as shown in Fig.8.

Fig.10 shows a schematic block diagram of a station according to an embodiment of the present invention.

As shown in Fig.10, the station 1000 according to the embodiment of the present invention includes: the receiver 500 as shown in Fig.5; and the receiver 800 as shown in Fig.8.

In summary, the technical solution of the present invention is mainly to add a new state based on the existing Wi-Fi standard, which is called a light wake state (i.e., Light Awake).

Specifically, as shown in Fig.11, when a 802.11 data transceiver of the device (which may be an access point or a station) is in the sleep state, the receiver (i.e., the WUR as shown in Fig.11) of the wake up communication frame is in the light and awake state. When the receiver of the wake up communication frame receives the wake up communication frame, the receiver of the wake up communication frame wakes up the 802.11 data transceiver in the sleep state through an internal chip processing instruction. The primitive of the receiver of the wake up communication frame for waking up the 802.11 data transceiver may be:

```
     MLME Awake request (
                               Receive WU Packet
                               Awake timer reset
                              )
```

When the 802.11 data transceiver receives the wake up instruction sent by the receiver of the wake up communication frame, the 802.11 data frame is received from the sleep state to the awake state; and the 802.11 data transceiver may be converted to the sleep state again after completing the communication, and notifies the receiver of the wake up communication frame of the converted state.

The technical solution of the present invention is described in detail above with reference to the drawings. The present invention proposes a new communication solution of the wireless local area network, which can meet the demands of the WUR by defining a new state, thereby being conducive to reducing the energy consumption of the device.

The above descriptions are only the preferred embodiments of the present invention, and are not intended to limit the present invention, and various modifications and changes can be made to the present invention for those skilled in the art. Any modifications, equivalent substitutions, improvements and the like made within the spirit and scope of the present invention shall all be encompassed within the protection scope of the present invention.

## Claims

1. A communication method of a wireless local area network, comprising:
receiving, by a first receiver for receiving a wake up frame, a wake up frame, wherein the first receiver is in a light awake state, and the light awake state is a state for monitoring the wake up frame; and
after the first receiver receives the wake up frame, sending a wake up instruction to a second receiver that is configured to receive an IEEE 802.11 data frame and is in a sleep state, so as to wake up the second receiver to receive the IEEE 802.11 data frame.

2. The communication method of the wireless local area network according to claim 1, wherein after sending the wake up instruction to the second receiver, the method further comprises:
receiving, by the first receiver, a notification message sent by the second receiver, wherein the notification message is used for notifying the first receiver that the second receiver has completed receiving the IEEE 802.11 data frame and will enter the sleep state again.

3. A communication method of a wireless local area network, comprising:
receiving, by a second receiver that is configured to receive an IEEE 802.11 data frame and is in a sleep state, a wake up instruction sent by a first receiver, wherein the first receiver is in a light awake state, and the first receiver sends the wake up instruction to the second receiver after receiving a wake up frame; and
entering, by the second receiver, an awake state to receive the IEEE 802.11 data frame after receiving the wake up instruction.

4. The communication method of the wireless local area network according to claim 3, further comprising:
after completing the reception of the IEEE 802.11 data frame, entering, by the second receiver, the sleep state again, and sending a notification message of being about to enter the sleep state again to the first receiver.

5. A receiver, wherein the receiver is in a light awake state, the light awake state is a state for monitoring a wake up frame, and the receiver comprises:
a first receiving unit for receiving a wake up frame; and
a sending unit for sending a wake up instruction to a second receiver that is configured to receive an IEEE 802.11 data frame and is in a sleep state after the first receiving unit receives the wake up frame, so as to wake up the second receiver to receive the IEEE 802.11 data frame.

6. The receiver according to claim 5, further comprising:
a second receiving unit for receiving a notification message sent by the second receiver after the sending unit sends the wake up instruction to the second receiver, wherein the notification message is used for indicating that the second receiver has completed receiving the IEEE 802.11 data frame and will enter the sleep state again.

7. A receiver, wherein the receiver is used for receiving an 802.11 data frame and is in a sleep state, and the receiver comprises:
a receiving unit for receiving a wake up instruction sent by a first receiver, wherein the first receiver is in a light awake state, and the first receiver sends the wake up instruction after receiving a wake up frame; and
a processing unit for entering an awake state so as to receive the IEEE 802.11 data frame after the receiving unit receives the wake up instruction.

8. The receiver according to claim 7, wherein:
the processing unit is further used for entering the sleep state again after completing the reception of the IEEE 802.11 data frame; and
the receiver further comprises: a sending unit for sending a notification message of being about to enter the sleep state again to the first receiver.

9. An access point, comprising:
the receiver according to claim 5 or 6; and
the receiver according to claim 7 or 8.

10. A station, comprising:
the receiver according to claim 5 or 6; and the receiver according to claim 7 or 8.
